Europäisches Patentamt

European Patent Office

Office européen des brevets

(11) Numéro de publication: **0 588 405 A1**

# DEMANDE DE BREVET EUROPEEN

(21) Numéro de dépôt: 93202531.5

(22) Date de dépôt: **30.08.93**

(51) Int. Cl.5: **G06F 15/70**, G01S 3/786,
B64G 1/36, G06F 15/353

(30) Priorité: **02.09.92 FR 9210481**

(43) Date de publication de la demande:
**23.03.94 Bulletin 94/12**

(84) Etats contractants désignés:
**DE FR GB IT**

(71) Demandeur: **LABORATOIRES
D'ELECTRONIOUE PHILIPS
22, Avenue Descartes
F-94450 Limeil-Brévannes(FR)**

(84) **FR**

(71) Demandeur: **PHILIPS ELECTRONICS N.V.
Groenewoudseweg 1
NL-5621 BA Eindhoven(NL)**

(84) **DE GB IT**

(72) Inventeur: **Florent, Raoul
Socièté Civile S.P.I.D.,
156, Boulevard Haussmann
F-75008 Paris(FR)**

(74) Mandataire: **Lottin, Claudine et al
Société Civile S.P.I.D.
156, Boulevard Haussmann
F-75008 Paris (FR)**

(54) **Dispositif d'estimation des coordonnées du centre d'un cercle idéal à partir de la connaissance des coordonnées de points bruités distribués à sa périphérie.**

(57) Dispositif d'estimation des coordonnées $(a,b)$ du centre $O$ d'un cercle idéal dans un plan de référence d'origine $\omega(O,O)$, à partir de la connaissance des coordonnées d'un ensemble de points bruités $M_k(O)$ distribués à la périphérie CT de ce cercle, ce dispositif mettant en oeuvre un critère dit des moindres carrés et comprenant :
- des moyens d'extraction (3) des coordonnées des points $M_k(O)$ de périphérie CT du cercle de centre $O$ à estimer,
- des moyens de calcul (4, 5, 6, 7, 8) pour fournir une estimation $(\hat{a},\hat{b})$ des coordonnées $(a,b)$ du centre $O$ du cercle à estimer en mettant en oeuvre ledit critère des moindres carrés selon lequel est réalisée la minimisation de l'énergie de la différence entre, d'une part, le carré de la distance entre les points $M_k$ de périphérie et le centre $O$ de coordonnées recherchées, et, d'autre part, le carré du rayon $R$ du cercle,
ce dispositif comprend en outre :
- des moyens (1) pour fournir aux moyens de calcul (4,5,6,7,8) une valeur du rayon $R$ de ce cercle de centre $O$,
- et des moyens (2) pour fournir aux moyens de calcul (4,5,6,7,8), les coordonnées d'un point $\Omega$ qui constitue une approximation primitivement connue de la position du centre $O$ du cercle à estimer.

Application : Télécommunications ; Imagerie médicale

EP 0 588 405 A1

FIG. 7

L'invention concerne un dispositif d'estimation des coordonnées (a,b) du centre O d'un cercle idéal dans un plan de référence à partir de la connaissance des coordonnées de points bruités $M_k$ (O) distribués à sa périphérie, ce dispositif mettant en oeuvre un critère dit des moindres carrés et comprenant :

- des moyens d'extraction des coordonnées des points $M_k$ (O) de périphérie du cercle de centre O à estimer,
- des moyens de calcul pour fournir une estimation $(\hat{a}, \hat{b})$ des coordonnées (a,b) du centre O du cercle à estimer en mettant en oeuvre ledit critère des moindres carrés selon lequel est réalisée la minimisation de l'énergie de la différence entre, d'une part, le carré de la distance entre les points $M_k$ (O) de périphérie et le centre O de coordonnées recherchées, et, d'autre part, le carré du rayon R du cercle.

Par dispositif d'estimation du centre d'un cercle, on entend aussi "identificateur" ou "estimateur".

L'invention concerne particulièrement un senseur de Terre, pour être embarqué sur un engin spatial, comprenant un extracteur pour l'extraction du contour du disque terrestre vu de l'engin, un identificateur du centre du disque terrestre et des moyens d'orientation de l'engin spatial par rapport à l'axe engin-centre de la Terre.

L'invention trouve son application dans le domaine des télécommunications, pour réaliser des senseurs de Terre capables d'orienter des satellites artificiels par rapport à l'axe satellite-centre de la Terre, dans le but de viser des antennes d'émission-réception, et d'améliorer ainsi la transmission d'informations qui transitent d'une région à une autre de la Terre, via ces satellites artificiels.

Un senseur d'horizon terrestre est déjà connu du brevet européen EP 405 678 A1. Ce dispositif connu utilise des éléments photosensibles à transfert de charges (CCD) pour détecter les transitions entre la Terre et l'Espace sur une image. Il met en oeuvre, dans le domaine allant du proche infra-rouge à l'ultraviolet (visible), le rayonnement solaire diffusé par l'atmosphère terrestre. Le dispositif connu permet la détermination du centre de la Terre. A cet effet, les éléments photosensibles à transfert de charges sont constitués en une matrice bidimensionnelle de détecteurs élémentaires. Des moyens de lecture déterminent les coordonnées des détecteurs élémentaires situés aux transitions Terre-Espace, puis des moyens de calcul déduisent la position du centre de la Terre dans le référentiel de la matrice.

Ainsi, à l'aide d'une optique de focalisation connue en soi, on forme une image de la Terre, ou de son halo, sur une matrice d'éléments photosensibles à transfert de charge (CCD) composée d'un très grand nombre de détecteurs élémentaires disposés selon un arrangement régulier de lignes et de colonnes. La matrice est lue ligne par ligne.

Les signaux provenant du registre de sortie de la matrice sont analysés par un circuit de comparaison comprenant deux seuils. Le circuit de comparaison ne retient les coordonnés d'un élément photosensible donné que si le signal correspondant est compris entre les deux seuils, ce qui permet de détecter les transitions entre l'Espace et la Terre, et donc d'obtenir le contour de la Terre au moyen de ces seuillages.

Après avoir été stockées en mémoire, les coordonnées des points de transition Terre-Espace sont traitées par une méthode de moindres carrés des coordonnées du centre du cercle passant au mieux par ces points de transition.

L'orientation des satellites artificiels est un problème important car ces satellites sont destinés à recevoir et à transmettre des signaux terrestres. Il faut donc qu'ils puissent viser les antennes terrestres avec une grande précision. Meilleure sera la précision, plus puissante sera la réception par les antennes terrestres.

On cherche à atteindre, au moyen du dispositif selon l'invention, une précision de 1 à quelques kilomètres au sol. En matière de précision, cette spécification s'évalue en degrés. Un but de l'invention est de fournir un senseur de Terre capable de déterminer le centre de la Terre à quelques centièmes de degré près, par exemple 1 à 5 centième de degré, afin d'obtenir la position de l'axe satellite-centre de la Terre avec cette même précision.

Une autre spécification relative au senseur de Terre concerne la fréquence ou autrement dit la cadence à laquelle le senseur peut fournir les mesures relatives aux coordonnées du centre de la Terre. Donc, un autre but de l'invention est de fournir un senseur de Terre capable de fournir des mesures relatives aux coordonnées du centre de la Terre à intervalles de temps réguliers et rapprochés.

Une autre spécification concerne la réalisation matérielle du senseur de Terre. Ce dispositif doit pouvoir être réalisé au moyen d'éléments physiques appropriés à être satellisés, c'est-à-dire peu encombrants et très fiables.

Une autre spécification relative au senseur de Terre concerne le domaine de longueurs d'onde dans lequel le senseur d'horizon doit travailler. Le senseur d'horizon connu du premier état de la technique cité (EP 405 678) inclut une matrice d'éléments photosensibles à transfert de charges qui travaille dans le visible. Cet agencement présente un avantage sur un éventuel dispositif qui travaillerait dans l'infrarouge.

En effet, dans le domaine des longueurs d'onde infrarouges, l'homme du métier ne sait pas réaliser de matrices, mais seulement des senseurs à 1, ou quelques pixels, auxquels on adjoint des moyens mécaniques pour que le ou les pixel(s) balaye(nt) la totalité de l'image à étudier. Ces moyens mécaniques pour réaliser le balayage d'une image par un senseur à 1 pixel ou quelques pixels sont extrordinairement lourds et compliqués, donc peu favorables à une satellisation. Un autre but de l'invention est donc de fournir un senseur de Terre travaillant dans le domaine des longueurs d'onde visibles avec des matrices d'éléments photosensibles, par exemple du type à transfert de charges.

En résumé, le senseur de Terre selon l'invention doit répondre aux spécifications posées de précision, de cadence, et de compacité et fiabilité du matériel.

Dans le cas des spécifications générales exposées ci-dessus, la présente invention se propose de résoudre plus particulièrement le problème de la détermination du centre de la Terre - ou identification - dans la phase dite de poursuite (en anglais : TRACKING). Dans cette phase, le senseur connaît déjà les coordonnées du centre de la Terre relatives à l'image précédente. Dans cette phase de poursuite, la tâche du senseur de Terre est de recalculer les coordonnées du centre de la Terre pour chacune des images suivantes successives. Les conditions sont telles que ces coordonnées évoluent en fait peu d'une image à la suivante, et que pour une image donnée, les coordonnées initiales sont connues avec une assez bonne précision.

Dans le cadre de ce problème particulier, on suppose que le cercle, dont on veut identifier le centre, n'est pas déformé, c'est-à-dire que, dans le cas où l'image d'un cercle est formé sur une matrice d'éléments, les pixels de la matrice sont supposés être carrés.

De plus, dans le cas de l'identification du centre de la Terre par un senseur, il est vrai que le rayon et l'ellipticité réels de la Terre sont parfaitement connus. Mais en fait, on ne connaît pas précisément le rayon et l'ellipticité apparents de la Terre. En effet, dans la situation pratique de l'observation de la Terre vue d'un engin spatial il se trouve que, à cause des variations d'éclairement journalières et saisonnière, la Terre est vue comme un cercle légèrement déformé, et ceci compte non tenu de son ellipticité propre. L'invention vise néanmoins à l'identification du centre d'un cercle parfait.

Une méthode pour estimer le centre d'un cercle et son rayon est déjà connue de la publication intitulée "A Simple Approach for the Estimation of Circular Arc Center and its Radius" par Samuel M. THOMAS dans "2435 Computer Vision, Graphics, and Image Processing ; 45 (1989) March, No. 3, Duluth, MN, US" p.362-370.

Cette publication décrit une méthode qui, à partir des coordonnées d'un nuage de points répartis à proximité d'un arc de cercle, fournit à la fois
- les coordonnées du centre du cercle
- la valeur du rayon du cercle
auquel appartient cet arc de cercle.

Cette méthode connue du second document cité (Computer Vision) s'applique donc à l'estimation du centre d'un cercle parfait, mais ne suppose rien, a priori sur la valeur du rayon du cercle dont on cherche à établir les coordonnées du centre, ou même sur une valeur approchée initiale de ces coordonnées. Cette méthode utilise simplement les coordonnées de points situés à la périphérie du cercle parfait étudié, et fournit à la fois la valeur du rayon, et les coordonnées du centre du cercle.

Cette méthode pourrait donc sembler très attractive. Elle s'appuie sur un critère selon lequel on effectue le calcul de la minimisation de l'énergie de la différence entre :
- d'une part, la distance entre le centre à estimer et les points de périphérie,
- et d'autre part le rayon recherché et elle conduit parfaitement à une solution analytique.

La forme mathématique de ce critère des moindres carrés est dans ce cas une fonction rationnelle des moments géométriques des points de périphérie, ce qui signifie que les calculs à réaliser sont simples et exacts.

Mais en revanche, la précision obtenue tant sur la valeur du rayon du cercle que sur la position du centre de ce cercle, n'est pas très grande.

Ainsi, le critère des moindres carrés, mis en oeuvre par cette méthode connue, conduit à un identificateur dont la précision est bien en dessous, et incompatible avec les exigences de précision liées à un senseur de Terre embarqué sur un engin spatial.

En particulier, cette précision n'est pas suffisante pour réaliser l'orientation d'un satellite de télécommunication vis-à-vis du centre de la terre selon l'un des buts de la présente invention. Un but de l'invention est donc de fournir la localisation du centre de la terre vue d'un engin spatial avec une précision très supérieure à celle que l'on obtient en appliquant la méthode décrite dans le document cité.

Selon l'invention, pour déterminer la localisation du centre de la terre vue d'un engin spatial, avec une précision suffisante pour orienter convenablement cet engin par rapport à ce centre de terre, on va tenir compte de la situation particulière selon laquelle, d'abord le rayon de la terre est déjà connu, ensuite, la localisation du centre de la terre à un instant donné est également déjà connue, mais justement avec la précision insuffisante fournie par la méthode du second document cité (computer vision).

A cet effet, on introduit dans le calcul du critère, la valeur du rayon R du cercle de terre déjà connu, et les valeurs des coordonnées du centre de terre également connues quoiqu'imprécisément. Dans ces conditions, les équations à résoudre -lesquelles sont exprimées dans le second document cité (computer vision)- ne sont plus des équations rationnelles (ce qui était le cas lorsque l'on partait des hypothèses que le rayon et la localisation du centre étaient inconnus), mais deviennent des équations irrationnelles très complexes à résoudre.

L'invention fournit alors un dispositif embarquable capable de mener à bien les calculs des coordonnées du centre de terre dans ces équations irrationnelles, d'une part de manière précise, et d'autre part en temps réel.

Un des buts de l'invention est de permettre l'identification du centre du cercle parfait étudié, avec une précision de 0,1 pixel pour un cercle dont le rayon est de l'ordre de 100 pixels. La précision recherchée est donc de l'ordre de 0,001 rayon.

L'estimateur que l'homme du métier peut réaliser sur la base du critère mis en oeuvre par la méthode connue du second document cité (computer vision) n'est pas en mesure d'atteindre une telle précision. Des essais effectués ont montré que la précision possible était 5 à 10 fois inférieure à la précision voulue, cette précision dépendant très fortement du nombre de points disponibles à la périphérie du cercle, et de leur répartition sur cette périphérie. En effet, le disque Terrestre, objet de l'application envisagée peut être partiellement ou totalement éclairé. Le plus souvent, il est seulement partiellement éclairé, ce qui donne lieu à des points de périphérie extraits qui forment un cercle incomplet. Lorsqu'une partie de la périphérie est manquante, la précision obtenue au moyen de l'estimateur cité est très fortement dégradée. Par dégradée, il faut entendre qu'elle est supérieure à 0,2 pixel pour la position du centre, et que cet écart est trop grand pour répondre aux exigences relatives au senseur embarqué.

Les buts de l'invention sont atteints au moyen d'un dispositif tel que défini dans le préambule, caractérisé en ce qu'il comprend en outre :
- des moyens pour fournir aux moyens de calcul une valeur du rayon R de ce cercle de centre O,
- et des moyens pour fournir aux moyens de calcul les coordonnées d'un point $\Omega$ qui constitue une approximation primitivement connue de la position du centre O du cercle à estimer.

Un estimateur qui prend ainsi en compte dans l'estimation des coordonnées du centre du cercle, une valeur préalablement connue du rayon R, et une approximation préalablement connue de la position du centre donne une précision 1 à 5 fois meilleure qu'un estimateur qui n'utilise pas ces données, et ceci particulièrement lorsque le cercle à estimer est réduit à un secteur.

Dans une mise en oeuvre de l'invention ce dispositif est caractérisé en ce que les moyens de calcul des coordonnées estimées $(\hat{a}, \hat{b})$ du centre O du cercle comprennent:
- des moyens de calcul d'une translation définie par $\vec{T}_{\Omega\omega}$ pour amener le point $\Omega$, primitivement approximativement connu, en coïncidence avec l'origine $\omega(O,O)$ du plan de référence ;
- des moyens de calcul des coordonnées de points $M_k(O')$ obtenus à partir des points de périphérie $M_k(O)$ par la translation définie par $\vec{T}_{\Omega\omega}$ ;
- des moyens de calcul pour réaliser la mise en oeuvre du critère des moindres carrés appliqué au système obtenu par la translation $\vec{T}_{\Omega\omega}$ formé des points de périphérie $M_k(O')$ et du rayon R, de manière à réaliser la minimisation de l'énergie de la différence entre, d'une part le carré de la distance entre les points de périphérie $M_k(O')$ translatés et le centre O' du cercle défini par ces derniers, et, d'autre part le carré du rayon R de ce cercle, pour fournir les coordonnées estimées $(\hat{a}', \hat{b}')$ de ce centre O' du cercle translaté ;
- des moyens de calcul des coordonnées estimées $(\hat{a}, \hat{b})$ du centre O du cercle, déterminées par la translation inverse $\vec{T}_{\Omega\omega} = -\vec{T}_{\Omega\omega}$ appliquée sur le point O' de coordonnées estimées $(\hat{a}', \hat{b}')$.

Dans cette mise en oeuvre, les calculs sont facilités par l'utilisation de fonctions analytiques.

Dans une mise en oeuvre de l'invention ce dispositif est caractérisé en ce que les moyens de calcul pour réaliser la mise en oeuvre du critère des moindres carrés comprennent des moyens pour évaluer des quantités $X_i$, $Y_i$, $XY_{ij}$ proportionnelles aux moments d'ordre 3 ou moins des distributions des points $M_k(x_k, y_k)$, et en ce que les moyens de calcul pour réaliser la mise en oeuvre du critère des moindres carrés comprennent des moyens pour minimiser en module les dérivées du critère effectuées d'une part en fonction de la variable a, correspondant à l'abscisse du centre à estimer, et d'autre part en fonction de la variable b, correspondant à l'ordonnée du centre à estimer, la position des points de périphérie $M_k$ étant définie par leurs coordonnées $x_k$, $y_k$, ces moyens fournissant une expression analytique des valeurs estimées $(\hat{a}, \hat{b})$ des coordonnées (a,b) qui minimisent ledit critère en se fondant sur des hypothèses selon lesquelles :

- l'écart type du bruit sur les points de périphérie est faible devant la valeur du rayon R du cercle ;
- la distance entre le centre du cercle à estimer et le centre du cercle connu approximativement est faible devant ladite valeur du rayon R du cercle ; cette expression analytique étant développée en fonction des quantités $X_i$, $Y_i$, $XY_{i,j}$ proportionnelles aux moments d'ordre 3 ou moins.

Dans cette mise en oeuvre les calculs sont grandement facilités par des hypothèses simplificatrices qui rendent le dispositif particulièrement compatible avec l'application à un senseur de Terre.

L'invention est décrite ci-après en détail, en référence avec les figures schématiques annexées dont :

- la figure 1 montre un système optique d'un senseur de Terre ;
- la figure 2 montre une matrice d'éléments photosensibles liée au système optique ;
- la figure 3 montre l'identificateur représenté schématiquement par des blocs fonctionnels ;
- la figure 4 montre très schématiquement une image du disque terrestre sur fond d'espace sidéral, obtenue en niveaux de gris au moyen d'une matrice d'éléments photosensibles dans le visible, telle que celle de la figure 2 ;
- la figure 5a montre les points extraits du disque terrestre de la figure 4, dans le cas d'un éclairage partiel ;
- la figure 5b montre les points extraits du disque terrestre de la figure 4 dans le cas d'un éclairage total ;
- la figure 6 montre des courbes comparatives de la précision obtenue au moyen de l'identificateur selon l'invention et au moyen d'un identificateur connu.
- la figure 7 montre l'effet de l'opération de translation T, sur le cercle à estimer et sur le centre connu approximativement, pour amener ce dernier en coïncidence avec l'origine $\omega$ d'un plan de référence.

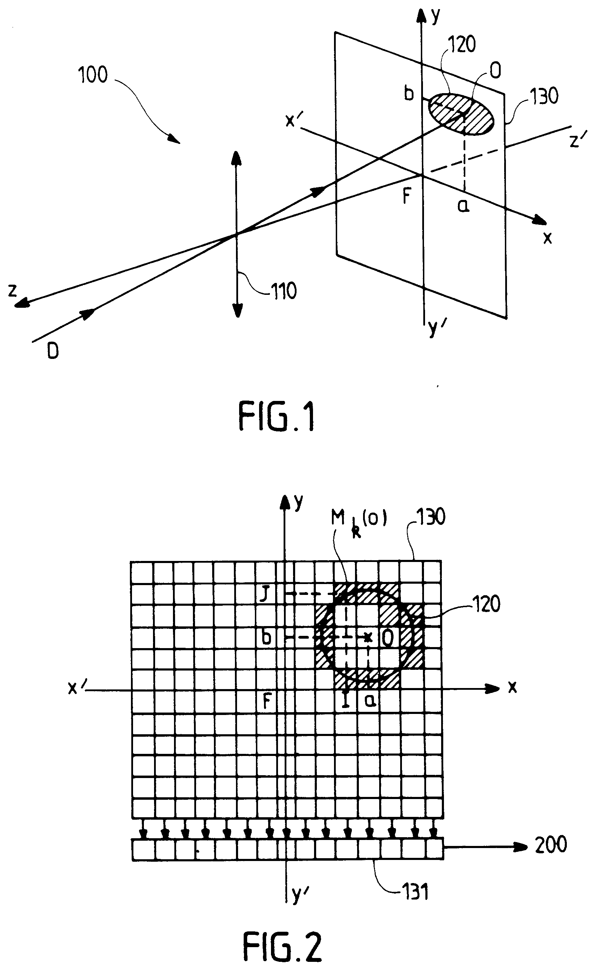

La figure 1 montre de façon schématique un viseur 100 d'horizon terrestre comportant un système optique 110 de focalisation comprenant au moins un objectif, destiné à focaliser le rayonnement solaire réfléchi par la Terre et diffusé par l'atmosphère terrestre de façon à former, dans le plan focal F du viseur 100, une image 120 de la Terre et de son halo.

Un filtre optique non représenté permet de limiter le rayonnement reçu par le viseur à une bande spectrale du domaine du visible, comprise sensiblement entre O, 3 et 1 $\mu$m.

Le senseur de Terre selon l'invention inclut par exemple un tel viseur d'horizon terrestre et a pour fonction de déterminer l'axe D senseur-centre de la Terre, de manière à permettre l'orientation d'un engin spatial à bord duquel est embarqué ledit senseur, par rapport à cet axe D.

La figure 2 montre que la recherche de la position de l'image du centre O de la Terre dans le plan focal F de l'objectif est réalisé en utilisant une matrice 130 d'éléments photosensibles par exemple à transfert de charges (CCD), telle qu'une matrice TH786 de Thomson-CSF.

La matrice 130 est lue en transférant séquentiellement ligne par ligne, ou bien colonne par colonne les signaux fournis par les éléments photosensibles dans un registre de sortie 131. Les lignes de la matrice sont parallèles à l'axe x'x, et les colonnes sont parallèles à y'y. Le foyer F du système optique est sur l'axe z'z.

Le contenu du registre de sortie est à son tour transféré vers des moyens 200 d'extraction dans le but de déterminer les coordonnées I, J des éléments photosensibles marqués en gris sur la figure 2 situés aux transitions Terre-Espace.

Le dispositif connu de l'état de la technique analyse les signaux correspondant à chaque élément photosensible et ne retient les coordonnées I, J d'un élément photosensible donné que si le signal correspondant est situé entre deux seuils de discrimination.

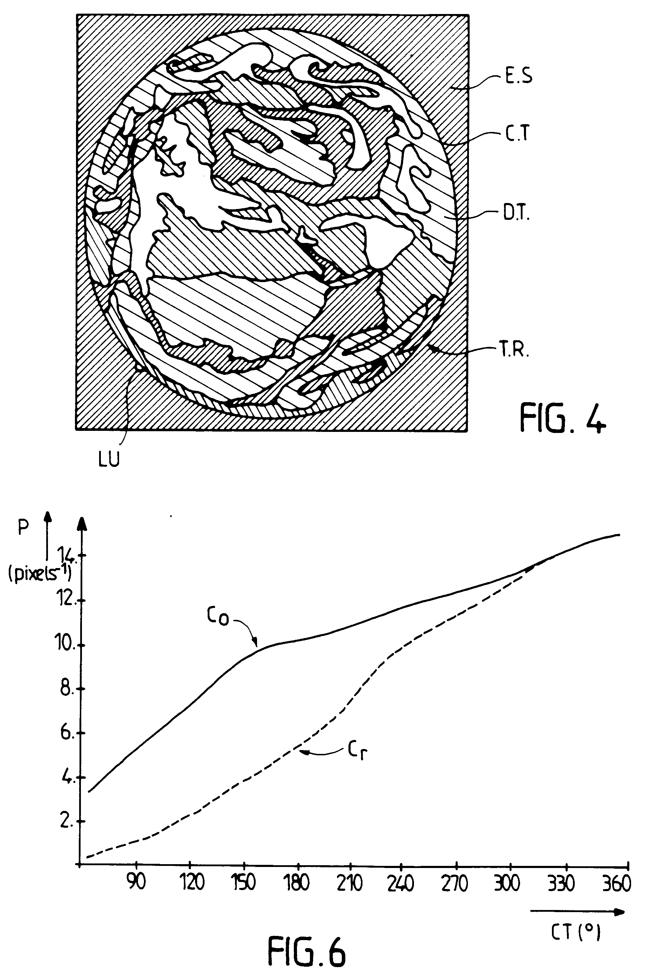

Le dispositif d'extraction traite tous les pixels de l'image représentée schématiquement sur la figure 4 telle qu'obtenue au moyen de la matrice d'éléments photosensibles représentée sur la figure 2. Sur la figure 4, les hachures sont d'autant plus serrées que la zone hachurée est foncée, c'est-à-dire que le niveau de gris est bas. La figure 4 a été simplifiée à 4 niveaux de gris. En réalité, on opère généralement sur des images ayant un plus grand nombre de niveaux de gris. D'une manière générale, l'image à traiter représente un objet sur un fond substantiellement uniforme, et est constituée de pixels repérés par leurs coordonnées dans un référentiel matriciel et affectés chacun d'une valeur sur une échelle de niveaux de gris.

Dans l'espace intersidéral ES, les informations gênantes proviennent notamment du Soleil qui à certaines heures se trouve proche de la Terre, presque à la périphérie et qui peut saturer les éléments photosensibles dans une direction de vidage de la matrice et dans les deux sens, c'est-à-dire à la fois vers le haut et vers le bas d'une colonne. D'autre part, la lune, LU, ou tout autre astre, peut aussi apporter une contribution gênante.

Dans le disque terrestre, DT, les informations gênantes peuvent provenir des îles et continents, et des perturbations atmosphériques, les transitions océan-continent, ou océan-nuage, ou continent-nuage, apportant une contribution très forte, comme il ressort de l'observation de l'image originale représentée sur la figure 4, qui montre de nombreux niveaux de gris différents.

Pour atteindre aux buts de l'invention, c'est-à-dire déterminer une estimation $(\hat{a}, \hat{b})$ des coordonnées $(a,b)$ du centre O de la Terre, il est impératif de s'affranchir de toutes les données autres que celles qui sont relatives à la périphérie CT du disque terrestre DT.

Le but de l'extraction est donc d'une part de s'affranchir des informations non pertinentes et gênantes provenant de l'espace intersidéral ES autour de la Terre, et de celles provenant de l'intérieur du disque terrestre DT.

En l'occurence, le but de l'extraction est de fournir l'indication de tous les pixels, à l'exclusion notamment des pixels qui correspondraient soit à l'Espace ES, soit à l'intérieur du disque terrestre, DT.

L'identification, qui est l'étape ultérieure, dépend étroitement de l'extraction : plus il existe de points non pertinents, c'est-à-dire n'appartenant pas à la périphérie CT, dans les résultats de l'extracteur, plus l'identification, qui fournit l'estimation $(\hat{a}, \hat{b})$ des coordonnées $(a,b)$ du centre O de la Terre à partir de ces résultats, est difficile, fastidieuse et peu robuste.

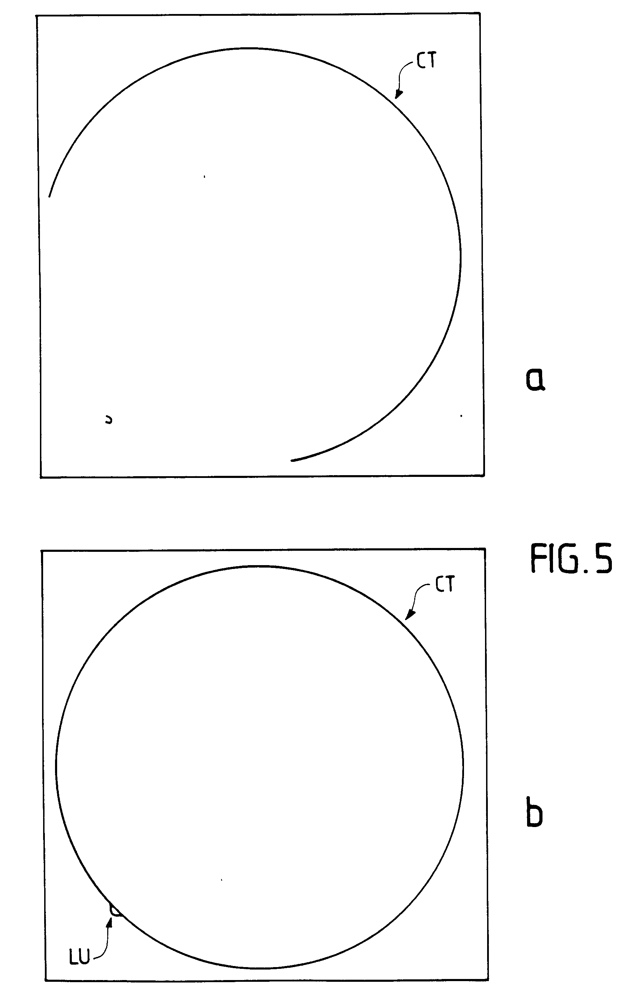

On supposera donc dans l'exposé ci-après disposer, en vue de l'identification d'un contour du disque terrestre CT tel que représenté sur l'une des figures 5a ou 5b. Le contour CT est formé d'un nuage bruité de points $M_k(O)$ disposés à la périphérie d'un cercle que l'on considérera par hypothèse comme parfait. Cependant l'ensemble des figures 5a et 5b montre que deux cas sont possibles. Ou bien les points extraits forment un cercle complet comme illustré par la figure 5b, du fait que le disque terrestre montré à la figure 4 était uniformément eclairé ; ou bien les points extraits forment un cercle incomplet comme illustré par la figure 5a, du fait que le disque terrestre était non uniformément éclairé.

La précision de l'identification dépend également, dans une large mesure, du nombre de points disponibles à la périphérie du cercle et de leur répartition. La répartition d'un grand nombre de points sur la totalité de la périphérie correspondant au cas représenté sur la figure 5b, est beaucoup plus favorable à l'obtention d'une bonne précision que celle qui correspond au cas représenté sur la figure 5a.

L'invention propose donc un dispositif d'identification mettant en oeuvre la méthode des moindres carrés, capable de fournir une estimation des coordonnées du centre O de la Terre avec une précision améliorée par rapport au dispositif connu de l'état de la technique, et ceci tous particulièrement dans le cas où les points extraits ne couvrent pas la totalité de la périphérie du cercle étudié, c'est-à-dire dans le cas du cercle extrait représenté sur la figure 5a.

Pour réaliser un estimateur par la méthode des moindres carrés, l'état de la technique ne prenait pas en compte la connaissance que l'on peut avoir du rayon R du cercle étudié. Selon l'invention au contraire, on propose un estimateur qui met en oeuvre la méthode des moindres carrés en prenant en compte la valeur du rayon R du cercle, qui est alors supposée connue A PRIORI. Pour un estimateur appliqué à la réalisation d'un senseur de Terre, cette hypothèse ne pose pas de problème puisque le rayon de la Terre est connu avec exactitude, à condition de ne pas tenir compte du halo atmosphérique et en supposant que le disque terrestre est un cercle idéal.

On appelera ci-après «R→msq» un estimateur tel que celui que propose l'invention, qui prend en compte le rayon R du cercle étudié, pour l'appliquer (l'application étant symbolisée par une flèche) dans la méthode des moindres carrés (en anglais : Mean Sqare ; en abrégé : msq).

Cette notation permet de mieux distinguer l'estimateur de l'invention de l'estimateur connu dans lequel la méthode des moindres carrés (msq) conduisait (opération symbolisée par une flèche) à la connaissance finale du rayon R, cet estimateur connu pouvant alors symboliquement être appelé «msq→R».

On rappelle que le but de l'estimateur connu et de l'estimateur selon l'invention est de fournir une estimation des coordonnées du centre O du cercle parfait étudié.

Le critère C utilisé pour mettre en oeuvre la méthode des moindres carrés (msq) selon l'invention, suppose la minimisation de l'énergie de la différence entre :
- d'une part le carré de la distance $D_k$ entre le centre O à estimer et les points de périphérie $M_k$,
- et d'autre part le carré du rayon R.

On peut exprimer ce critère C par la formule 1) qui est la minimisation de la somme $\Sigma$, de $k = 1$ à $k = N$, (où N est le nombre total des points de périphérie) de la différence

$$[D_k^2 - R^2]^2$$

ce qui s'écrit :

$$C = \sum_{k=1}^{k=N} [D_k^2 - R^2]^2 \qquad\qquad (1)$$

L'homme du métier aurait pu penser à utiliser plutôt dans le critère C une simple différence entre la distance $D_k$ et le rayon R, ce qui aurait conduit à chercher le minimum de la somme $\Sigma$ de la différence $[D_k - R]^2$.

Cependant en considérant selon l'invention les carré de la distance $D_k$ et du rayon R, c'est-à-dire la différence

$$[D_k^2 - R^2]^2,$$

on apporte une modification pratique à la formulation du critère, car l'évaluation de la distance $D_k$ fait intervenir le calcul d'une racine carrée, ce qui rend la minimisation analytique du critère impossible.

Par expression analytique, on entend une expression qui peut être évaluée au moyen de fonctions mathématiques usuelles.

Selon l'invention, dans la formulation de C en 1), le rayon R est supposé connu, ainsi que les coordonnées des points $M_k$ de périphérie. On cherche donc à minimiser le critère C uniquement en fonction des coordonnées (a,b) du centre O du cercle étudié, et non plus en fonction du rayon R, comme ce serait le cas conformément à l'état de la technique.

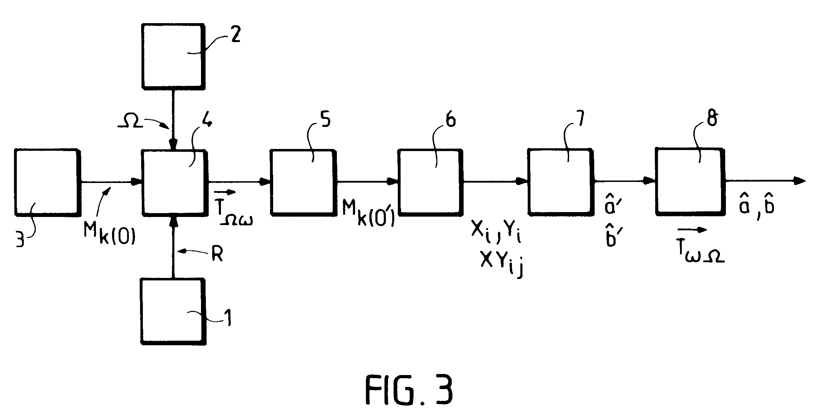

Sur la figure 3, le dispositif d'estimation représenté par des blocs fonctionnels comprend :
- des moyens d'extraction 3 des coordonnées des points $M_k$ (O) de périphérie CT du cercle de centre O à estimer,
- des moyens 1 pour fournir la valeur du rayon R de ce cercle de centre O,
- des moyens de calcul pour fournir une estimation $(\hat{a},\hat{b})$ des coordonnées (a,b) du centre O du cercle à estimer en mettant en oeuvre ledit critère des moindres carrés conformément à la relation 1) citée plus haut.

Il apparaît alors de façon surprenante, après des calculs, que la mise en oeuvre de ce critère avec les hypothèses selon lesquelles le rayon R est connu, en même temps que les coordonnées (a,b) du centre O sont inconnues, ne conduit pas à une solution analytique, c'est-à-dire que, si dans le critère C exprimé en 1, on suppose le rayon R connu, on ne peut pas résoudre le problème consistant à trouver les coordonnées du centre O de manière analytique.

Selon l'invention, une solution analytique a cependant été trouvée à ce problème, en ajoutant aux hypothèses précédentes, l'hypothèse selon laquelle on possède a priori une connaissance initiale des coordonnées du centre O du cercle avec une certaine imprécision.

Dans l'application à la réalisation d'un senseur de Terre pour l'estimation du centre de la Terre, on a déjà noté, qu'en phase poursuite, on connait les coordonnées du centre de la Terre à un instant initial, et le senseur de Tere a pour tache de calculer les coordonnées exactes du centre de la Terre pour chaque image suivante. Le satellite dérivant peu entre deux images, on peut considérer qu'à un instant donné, on connait les coordonnées du centre du disque terrestre avec une certaine imprécision.

Il est donc important de noter que dans l'exposé qui suit, on appuie le calcul du critère C sur les hypothèses selon lesquelles :
- le cercle est un cercle idéal, complet ou incomplet ;
- son rayon est connu ;
- les coordonnées d'un nombre N de points de périphérie sont connues ;
- on possède une connaissance imprécise, ou initiale, de valeurs des coordonnées du centre O du cercle ou secteur.

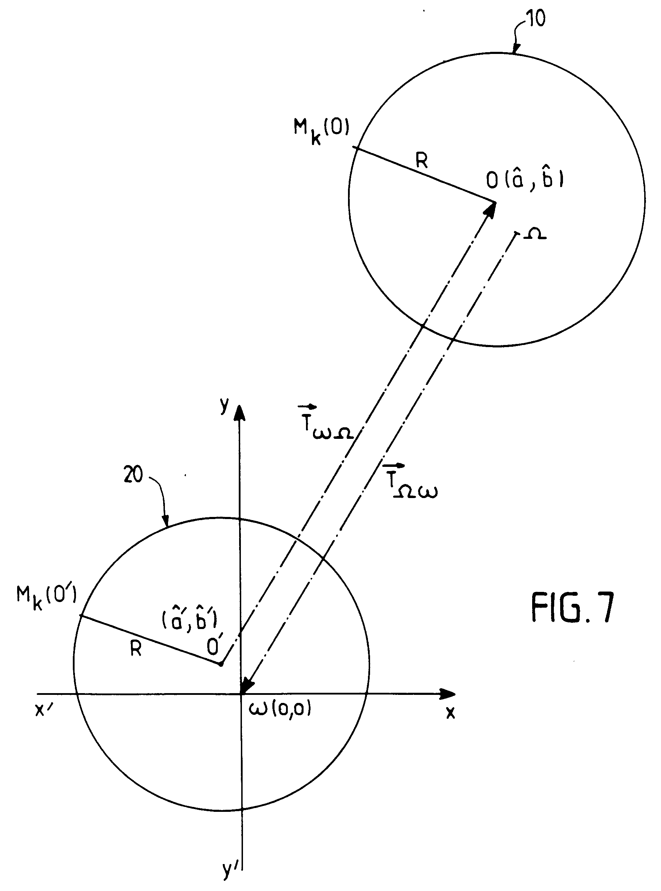

La figure 7 concrétise ces hypothèses de manière schématique. Le cercle 10 représente la distribution des points $M_k$(O) selon un cercle idéal, de rayon R connu, de centre O à estimer. Et le point $\Omega$ représente une position approximativement primitivement connue du centre O, c'est-à-dire dont les coordonnées sont proches de celles de O, et ont des valeurs imprécises par rapport à celles de O.

Pour la mise en oeuvre du critère formulé en 1), en référence avec la figure 3, les moyens de calcul des valeurs estimées des coordonnées du centre O comprennent :
- des moyens 2 pour fournir les coordonnées d'un point $\Omega$ qui constitue une approximation primitivement connue de la position du centre O du cercle à estimer ;

- des moyens de calcul 4 d'une translation définie par $\vec{T}_{\Omega\omega}$ pour amener le point $\Omega$, primitivement approximativement connu, en coïncidence avec l'origine $\omega(O,O)$ du plan de référence ;
- des moyens de calcul 5 des coordonnées de points $M_k(O')$ obtenus à partir des points de périphérie $M_k(O)$ par la translation définie par $\vec{T}_{\Omega\omega}$ ; la translation T fait coïncider le point $\Omega$ approximativement connu, avec l'origine $\omega$ de coordonnées $(O,O)$ d'un plan de référence, comme illustré par la figure 7.

Par cette translation $\vec{T}_{\Omega\omega}$, le cercle 10 à estimer vient en 20 et est centré en O'. Alors que le point $\Omega$ vient en $\omega$ (O,O).

Le point O' est maintenant, après la translation, le centre du cercle à estimer.

Dans ce qui suit, on appelle

(a,b) les coordonnées du centre O' à estimer,

$(x_k, y_k)$ les coordonnées de la distribution des N points $M_k$ du cercle 20 concerné,

ces coordonnées étant considérées par rapport au centre $\omega$ (O,O) du plan de référence. On appelle $M_k(O')$ la distribution des points $M_k$ sur le cercle 20 de centre O' à estimer.

En référence avec la figure 3, les moyens de calcul comprennent en outre :

- des moyens de calcul 6 et 7 pour réaliser la mise en oeuvre du critère des moindres carrés appliqué au système obtenu par la translation $\vec{T}_{\Omega\omega}$ formé des points de périphérie $M_k(O')$ et du rayon R, de manière à réaliser la minimisation de l'énergie de la différence entre, d'une part le carré de la distance entre les points de périphérie $M_k(O')$ translatés et le centre O' du cercle défini par ces derniers, et, d'autre part le carré du rayon R de ce cercle, pour fournir les coordonnées estimées ($\hat{a}'$, $\hat{b}'$) de ce centre O' du cercle translaté ;
- des moyens de calcul 8 des coordonnées estimées ($\hat{a},\hat{b}$) du centre O du cercle, déterminées par la translation inverse $\vec{T}_{\Omega\omega} = -\vec{T}_{\Omega\omega}$ appliquée sur le point O' de coordonnées estimées ($\hat{a}'$, $\hat{b}'$).

Avec ces notations définies plus haut le critère C de la formule 1) peut s'écrire selon la formule 2) :

$$C = \sum_{k=1}^{k=N} \left[ (a-x_k)^2 + (b-y_k)^2 - R^2 \right]^2 \tag{2}$$

Cependant, pour que le critère C puisse être mis en oeuvre par la nouvelle méthode choisie, plusieurs conditions s'imposent.

Selon une première condition, il est nécessaire que la connaissance initiale approximative que l'on a du centre du cercle étudié corresponde à une imprécision sur les coordonnées du centre qui soit petite devant la valeur du rayon R du cercle. Pour l'application envisagée, l'imprécision sur la connaissance de la position du centre du cercle entre deux images consécutives extraites, est de l'ordre de 1 pixel, alors que la valeur du rayon du cercle est de l'ordre de 100 pixels.

Or, le rapport entre le rayon R et l'imprécision sur le centre O est ce que l'homme du métier appelle 2 ordres de grandeur ($10^2$). Donc la méthode choisie s'applique parfaitement au senseur de Terre envisagé.

Selon une deuxième condition, il est nécessaire que les points de périphérie du cercle soient connus avec une imprécision de l'ordre du pixel, donc 100 fois plus petite que le rayon, et ici encore de 2 ordres de grandeur ($10^2$). Cette condition est remplie dans le cas du senseur de Terre du fait que l'on a la possibilité d'utiliser un extracteur de contour tel que décrit dans la Demande de brevet français enregistrée sous le n° 92 06724 du 3 juin 1992. Cet extracteur fournit les points de périphérie avec une imprécision inférieure ou égale au pixel, donc 100 fois plus petite que le rayon dans le cas où ce dernier est de l'ordre de 100 pixels.

En référence avec la figure 3, dans les moyens de calcul concrétisés par les blocs fonctionnels 6, 7, on recherche le doublet ($\hat{a}'$, $\hat{b}'$) qui minimise le critère C exprimé dans la relation 2). Il ressort que ces valeurs ($\hat{a}'$, $\hat{b}'$) annulent la dérivée partielle du critère C, en a et en b, d'où on peut écrire le couple de relations suivantes formant le système d'équations 3)

$$\left. \begin{array}{l} \dfrac{\partial C}{\partial a} = 0 \ conduit\ à \displaystyle\sum_{k=1}^{k=N} (a-x_k)\left[(a-x_k)^2 + (b-y_k)^2 - R^2\right] = 0 \\[4mm] \dfrac{\partial C}{\partial b} = 0 \ conduit\ à \displaystyle\sum_{k=1}^{k=N} (b-y_k)\left[(a-x_k)^2 + (b-y_k)^2 - R^2\right] = 0 \end{array} \right\} \tag{3}$$

On est alors amené à définir dans le bloc 6 les quantités suivantes :

$X_i$, $Y_j$, $XY_{ij}$

qui sont proportionnelles aux moments des distributions $M_k(x_k, Y_k)$.
Dans cette définition :

$$X_i = \sum_{k=1}^{k=N} x_k^i \qquad (5)$$

qui exprime que $X_i$ est la somme de k = 1 à k = N des abscisses $x_k$ des points $M_k$ de périphérie à la puissance i.

$$Y_i = \sum_{k=1}^{k=N} y_k^i \qquad (6)$$

qui exprime que $Y_i$ est la somme de k = 1 à k = N des ordonnées $y_k$ des points $M_k$ de périphérie à la puissance j.

$$XY_{i,j} = \sum_{k=1}^{k=N} x_k^i \, y_k^j \qquad (7)$$

qui exprime que $XY_{ij}$ est la somme de k = 1 à k = N, des produits des abscisses $x_k$ à la puissance i, par les ordonnées $y_k$ à la puissance j.

Dans les expressions de $X_i$ et $Y_i$, $i \in [1,3]$ ; et dans l'expression $XY_{i,j}$, (i + j) < 4 ; avec i > O et j > O.

Dans les moyens de calcul concrétisés par le bloc 6 de la figure 3, on calcule les quantités $X_i$, $Y_j$, et $XY_{i,j}$ proportionnelles aux moments des distributions $M_k(x_k, y_k)$.

Dans les moyens de calcul concrétisés par le bloc 7 de la figure 3, des calculs élémentaires permettent, en tenant compte des notations 5), 6) et 7), de transformer le système d'équations 3) en le système suivant :

$Na^3 - 3X_1a^2 + (3X_2 + Y_2 - NR^2)a + Nb^2a - 2Y_1ab - X_1b^2 + 2XY_{11}b - X_3 + X_1R^2 - XY_{12} = 0$  $Nb^3 - 3Y_1b^2 + (3Y_2 + X_2 - NR^2)b + Na^2b - 2X_1ab - Y_1a^2 + 2XY_{11}a - Y_3 + Y_1R^2 - XY_{21} = 0$   4)

Ce système 4) fait intervenir les quantités suivantes proportionnelles aux moments :

$X_1$, $X_2$, $X_3$   5 bis)

$Y_1$, $Y_2$, $Y_3$   6 bis)

$XY_{11}$, $XY_{12}$, $XY_{21}$   7 bis)

qui correspondent aux moments d'ordre 3 ou moins. Les calculs précédents étaient réalisés de manière exacte, c'est-à-dire sans approximation.

Il apparaît alors que le système d'équations 4), comme on l'a présenté plus haut, ne se résout pas de façon analytique. C'est pourquoi, on a été amené à envisager des solutions approchées, et à cet effet, on a utilisé les hypothèses exposées précédemment et résumées ci-après :
- Hypothèse "faible bruit". L'écart type du bruit sur les points de la périphérie est faible par rapport au rayon R du cercle.
- Hypothèse "centre prélocalisé". On suppose connues des coordonnées du centre du cercle avec une incertitude faible devant le rayon.

- Hypothèse "cercle centré". L'hypothèse précédente permet par la translation réalisée lors de la première étape de considérer que les points $M_k(x_k, y_k)$ sont sur le cercle 20 dont le centre O' est extrêmement proche de l'origine $\omega$ (O,O).

Les hypothèses énoncées permettent d'écrire que :

$$\forall\, k \in [1, N],\ a \text{ et } b \ll |x_k|\ \text{ou}\ |y_k| \qquad\qquad \beta)$$

ce qui s'énonce : quel que soit k appartenant à [1, N], tout point $M_k$ de la périphérie a au moins une coordonnée $x_k$, $y_k$ qui, en valeur absolue, est grande devant les coordonnées $(\hat{a}', \hat{b}')$ du centre O du cercle ou secteur à estimer.

L'homme du métier pourrait alors penser développer le système 3) au premier ordre, ou au second ordre ; mais il apparaît, après des essais, que cette démarche ne conduit pas à de bons résultats. L'échec de cette approche peut être expliqué par la faible disparité en module des termes des équations du système 4).

Selon l'invention, on a choisi de réaliser l'approximation suivante, qui peut être faite compte tenu des hypothèses exposées plus haut : on néglige dans le système 3) la somme :

$$\sum_{k=1}^{k=N} a\,[\,(a-x_k)^2 + (b-y_k)^2 - R^2\,]$$

devant la somme :

$$\sum_{k=1}^{k=N} x_k\,[\,(a-x_k)^2 + (b-y_k)^2 - R^2\,]$$

et on fait le même calcul en remplaçant a par b, et $x_k$ par $y_k$, ce qui permet de transformer le système 3) en 9) qui s'écrit comme ci-dessous :

$a^2X_1 - 2aX_2 + X_3 + b^2X_1 - 2b\,XY_{11} + XY_{12} - R^2X_1 = 0$   $b^2Y_1 - 2bY_2 + Y_3 + a^2Y_1 - 2a\,XY_{11} + XY_{21} - R^2Y_1 = 0$   9)

Pour réaliser le calcul relatif à ce système 9) on effectue un changement de variables. On pose :

$$A = \frac{X_1 XY_{11} - X_2 Y_1}{Y_1 XY_{11} - Y_2 X_1} \qquad\qquad (10)$$

$$B = \frac{X_3 Y_1 + Y_1 XY_{12} - Y_3 X_1 - X_1 XY_{21}}{2\,(Y_1 XY_{11} - Y_2 X_1)} \qquad\qquad (11)$$

$\alpha = (1 + A^2)X_1$   (12)

$\beta = (X_2 + XY_{11}A - A.B\,X_1)$   (13)

$\gamma = (X_3 - 2\,XY_{11}B + XY_{12} - R^2X_1 + X_1 B^2)$   (14)

et

$\Delta = \gamma^2 - 4\alpha\gamma$   (15)

A l'issue des calculs, on trouve que le doublet recherche $(\hat{a}', \hat{b}')$ est tel que :

â' est : solution de l'équation $\alpha a^2 + \beta a + \gamma = 0$ (16)
et

$$\hat{b}' \text{ est : solution de l'équation } b = Aa + B \qquad (17)$$

les équations (16) et (17) admettent deux solutions qui sont les doublets :

$$\hat{a}_1', \hat{b}_1' \qquad (18)$$

et

$$\hat{a}_2', \hat{b}_2' \qquad (19)$$

qui correspondent à :

$\hat{a}'_1 = (\beta + \sqrt{\Delta})/2\alpha$ (18bis)

$\hat{a}'_2 = (\beta - \sqrt{\Delta})/2\alpha$ (19bis)

Si les points $M_k$ ($x_k$, $y_k$) sont sur un cercle incomplet, par exemple tel que montré figure 5a, et s'ils sont fortement bruités, alors l'erreur moyenne sur le rayon R calculée a posteriori peut être plus grande pour la solution réelle que pour son homologue, c'est-à-dire que l'on ne peut pas, dans les cas extrêmes, choisir entre $\hat{a}_1$ et $\hat{a}_2$ par la simple observation de l'erreur moyenne commise sur le rayon.

Cependant, on vérifie que les points :

O'$_1$ ($\hat{a}_1$, $\hat{b}_1$) et O'$_2$ ($\hat{a}_2$, $\hat{b}_2$) sont fortement éloignés l'un de l'autre, de l'ordre de grandeur du diamètre du cercle = 2R, et que l'un d'entre eux est plus proche de $\omega$(O,O) l'origine, que l'autre. Il est donc facile d'isoler la solution correcte qui correspond au doublet le plus proche de $\omega$(O,O).

On obtient donc la solution suivante :

Le centre du cercle à estimer a pour coordonnées le module minimum de l'ensemble {($\hat{a}_1$, $\hat{b}_1$) , ($\hat{a}_2$, $\hat{b}_2$)} où

$$\begin{aligned} \hat{a}'_1 &= (\beta + \sqrt{\Delta})/2\alpha \text{ et } & \hat{b}_1' &= \hat{a}_1 A + B \\ \text{et où } \hat{a}'_2 &= (\beta - \sqrt{\Delta})/2\alpha \text{ et } & \hat{b}_2' &= \hat{a}_2 A + B \end{aligned} \right\} \qquad (20)$$

Les quantités $\beta$, $\alpha$ et $\gamma$ sont, ainsi que A et B, des fonctions rationnelles des moments d'ordre 1 à 3 du nuage des points de périphérie. Cependant la solution finale s'exprime comme une fonction IRRATIONNELLE de ces quantités.

En référence avec la figure 3, on effectue ensuite dans le bloc fonctionnel 8, une translation inverse de $\vec{T}_{\Omega\omega}$ c'est-à-dire $\vec{T}_{\Omega\omega}$, pour ramener le cercle 20 dans la position 10 d'origine. Les coordonnées recherchées du centre O du cercle sont ($\hat{a}$,$\hat{b}$) qui se déduisent de ($\hat{a}'$, $\hat{b}'$) par ladite translation inverse.

Des essais ont montré que, à la différence de l'estimateur "R→msq" selon l'invention décrit plus haut en détail, l'estimateur "msq→R" dont on a parlé précédemment pourraît fournir les coordonnées du centre du cercle à estimer, ainsi que le rayon de ce cercle en traitant des fonctions RATIONNELLES des neufs variables exposées en 5bis, 6bis, 7bis.

Mais dans tous les cas, l'estimateur "R→msq" selon l'invention donne des meilleurs résultats que l'estimateur "msq→R". L' imprécision sur les estimations fournies par l'estimateur selon l'invention est en moyenne 5 fois plus petite que celle de l'autre estimateur.

Notamment, plus le secteur CT éclairé, ou la portion du disque terrestre éclairée, est petit(e), plus l'amélioration apportée par l'invention est importante.

En outre, si l'on compare les résultats obtenus selon l'invention avec ceux obtenus par une méthode connue par ailleurs sous le nom de transformée de Hough, et qui a été éloignée dans le cas de l'application à un senseur embarquable parce qu'elle était trop consommatrice de temps de calcul, on constate que l'estimateur "R→msq" selon l'invention se comporte encore de meilleure façon que ladite transformée de Hough, sans être, et de très loin, aussi consommateur en temps de calcul.

Les courbes représentées sur la figure 6 permettent d'apprécier l'amélioration apportée par l'estimateur "R→msq" vis-à-vis de l'estimateur cité "msq→R".

Sur cette figure 6, l'abscisse donne en degrés la longueur du secteur éclairé CT du cercle de la figure 5a, et l'ordonnée donne la précision P sur le positionnement du centre O du cercle à estimer, c'est-à-dire l'inverse de l'écart type de l'erreur de positionnement qui s'exprime en pixel $^{-1}$. Donc les points les plus hauts, en ordonnées, correspondent aux erreurs les plus petites ou à la meilleur précision.

La courbe $C_o$ représente donc en trait continu la précision P en pixels puissance -1 obtenue par l'estimateur "R→msq" selon l'invention en fonction de la longueur du secteur éclairé.

La courbe $C_r$ en trait discontinu concerne l'estimateur "msq→R" dont on a parlé.

Les courbes de la figure 6 montrent que, lorsque l'on dispose d'un cercle de 360°, les courbes sont confondues. Les deux estimateurs donnent de bons résultats.

Malheureusement, dans l'application à un senseur de Terre, ce cas est peu fréquent. Dans la plupart des situations d'éclairage de la Terre, on ne dispose que d'un secteur. Ou plus exactement, la situation où l'on dispose d'un cercle complet n'est pas constante pendant longtemps, et l'éclairage de la Terre variant constamment au cours de la journée et au cours de l'année, il faut pouvoir disposer d'un senseur capable de traiter la situation la plus fréquente d'un éclairage incomplet.

D'après les courbes de la figure 6, il apparaît donc que dès que le secteur CT devient inférieur à 330° et jusqu'à 150° la précision P du dispositif selon l'invention reste très bonne, et le senseur reste dans le domaine de spécifications imposées.

Par exemple, si le secteur éclairé CT est de 180° (la moitié du cercle), la courbe $C_o$ donne une précision de 10 pixels $^{-1}$ pour l'estimateur "R-msq" selon l'invention et la courbe $C_r$ seulement de 5 pixels $^{-1}$ pour l'estimateur "msq-R". Donc l'écart type est de 1/10 = 0,1 pixel pour l'estimateur selon l'invention, et de 1/5 = 0,2 pixel pour l'estimateur dont on a parlé.

De plus, la courbe de précision de la figure 6 est une courbe théorique, aussi bien $C_o$ que $C_r$ (obtenue par simulation avec un bruit gaussien sur les points de périphérie). Dans la pratique, l'amélioration due à l'invention s'est révélée être supérieure (de l'ordre d'un facteur 5, pour CT à l'abscisse 180°), tout en respectant l'allure générale des courbes de la figure 6.

Il faut bien prendre en compte qu'un tel écart type de 0,2 pixel avait été jugé inadmissible aux regards des spécifications imposées à un senseur de Terre embarquable. C'est pourquoi au contraire, on peut utiliser le senseur selon l'invention.

On a décrit plus haut, la suite des opérations à effectuer avec des moyens de calcul pour arriver au résultat c'est-à-dire à l'estimation des coordonnées du centre O du cercle.

Outre le matériel décrit plus haut on peut prévoir un module de sélection pour éliminer les éventuels points aberrants parmi les points de périphérie $M_k(O)$ à l'entrée du bloc 3 de la figure 3.

Le calcul des moments peut se faire dans le bloc 6, point par point. On peut par exemple extraire une ligne de l'image de la distribution des $M_k(O')$, et sur cette ligne, on extrait les deux points correspondant au cercle ou au secteur. Les points retenus sont alors accumulés dans des registres afin de calculer les moments. Ce calcul peut être fait dans la volée, ce qui est intéressant.

Lorsque ce calcul est effectué, il faut calculer les expressions IRRATIONNELLES, ce qui est fait dans le bloc 7. L'intérêt de la méthode est que le calcul des expressions IRRATIONNELLES n'est à faire qu'une seule fois par image, c'est-à-dire seulement avec la cadence imposée par le senseur de Terre.

Le dispositif selon l'invention peut être utilisé aussi bien en statique, pour le traitement d'images statiques, qu'en dynamique dans l'exemple cité d'un senseur de Terre, pour le traitement d'image dans des séquences d'images telles que, entre deux images successives séparées par en général 1/25 sec, l'objet, la Terre, n'a pas évolué beaucoup, et où on a donc une idée approximative de la position du centre du disque terrestre par l'étude des images précédentes.

**Revendications**

1. Dispositif d'estimation des coordonnées (a,b) du centre O d'un cercle idéal dans un plan de référence d'origine $\omega(O,O)$, à partir de la connaissance des coordonnées d'un ensemble de points bruités $M_k(O)$ distribués à la périphérie CT de ce cercle, ce dispositif mettant en oeuvre un critère dit des moindres carrés et comprenant :
   - des moyens d'extraction (3) des coordonnées des points $M_k(O)$ de périphérie CT du cercle de centre O à estimer,

- des moyens de calcul (4, 5, 6, 7, 8) pour fournir une estimation $(\hat{a},\hat{b})$ des coordonnées (a,b) du centre O du cercle à estimer en mettant en oeuvre ledit critère des moindres carrés selon lequel est réalisée la minimisation de l'énergie de la différence entre, d'une part, le carré de la distance entre les points $M_k$ de périphérie et le centre O de coordonnées recherchées, et, d'autre part, le carré du rayon R du cercle, caractérisé en ce qu'il comprend en outre :
- des moyens (1) pour fournir aux moyens de calcul (4,5,6,7,8) une valeur du rayon R de ce cercle de centre O,
- et des moyens (2) pour fournir aux moyens de calcul (4,5,6,7,8) les coordonnées d'un point Ω qui constitue une approximation primitivement connue de la position du centre O du cercle à estimer ;

2. Dispositif selon la revendication 1, caractérisé en ce que les moyens de calcul (4, 5, 6, 7, 8) des coordonnées estimées $(\hat{a},\hat{b})$ du centre O du cercle comprennent :
   - des moyens (4) de calcul d'une translation définie par $\vec{T}_{\Omega\omega}$ pour amener le point Ω, primitivement approximativement connu, en coïncidence avec l'origine ω(O,O) du plan de référence ;
   - des moyens (5) de calcul des coordonnées de points $M_k(O')$ obtenus à partir des points de périphérie $M_k(O)$ par la translation définie par $\vec{T}_{\Omega\omega}$ ;
   - des moyens (6,7) de calcul pour réaliser la mise en oeuvre du critère des moindres carrés appliqué au système obtenu par la translation $\vec{T}_{\Omega\omega}$ formé des points de périphérie $M_k(O')$ et du rayon R, de manière à réaliser la minimisation de l'énergie de la différence entre, d'une part le carré de la distance entre les points de périphérie $M_k(O')$ translatés et le centre O' du cercle défini par ces derniers, et, d'autre part le carré du rayon R de ce cercle, pour fournir les coordonnées estimées $(\hat{a}',\hat{b}')$ de ce centre O' du cercle translaté ;
   - des moyens de calcul des coordonnées estimées $(\hat{a},\hat{b})$ du centre O du cercle, déterminées par la translation inverse $\vec{T}_{\Omega\omega} = -\vec{T}_{\Omega\omega}$ appliquée sur le point O' de coordonnées estimées $(\hat{a}',\hat{b}')$.

3. Dispositif selon la revendication 2, caractérisé en ce que les moyens de calcul pour réaliser la mise en oeuvre du critère des moindres carrés comprennent des moyens (6) pour évaluer des quantités $X_i$, $Y_i$, $XY_{ij}$ proportionnelles aux moments d'ordre 3 ou moins des distributions des points $M_k (x_k, y_k)$, évaluations selon lesquelles :
   - $X_i$ est la somme, de k = 1 à k = N des abscisses $x_k$ des points $M_k$ de périphérie, en nombre N, à la puissance i ;
   - $Y_i$ est la somme, de k = 1 à k = N des ordonnées $y_k$ des N points $M_k$ de périphérie, à la puissance i ;
   - $XY_i$ est la somme, de k = 1 à k = N des produits des abscisses $x_k$ à la puissance i, par les ordonnées $y_k$ à la puissance j ;
   de telle manière que i et j soient strictement supérieurs à O, compris dans l'intervalle fermé [1,3] et que la somme de i et j intervenant dans les quantités $XY_{ij}$ soit strictement inférieure à 4.

4. Dispositif selon la revendication 3, caractérisé en ce que les moyens de calcul (4, 5, 6, 7, 8) pour réaliser la mise en oeuvre du critère des moindres carrés comprennent des moyens (7) pour minimiser en module les dérivées du critère effectuées d'une part en fonction de la variable a, correspondant à l'abscisse du centre à estimer, et d'autre part en fonction de la variable b, correspondant à l'ordonnée du centre à estimer, la position des points de périphérie $M_k$ étant définie par leurs coordonnées $x_k$, $y_k$, ces moyens (7) fournissant une expression analytique des valeurs estimées $(\hat{a},\hat{b})$ des coordonnées (a,b) qui minimisent ledit critère en se fondant sur des hypothèses selon lesquelles :
   - l'écart type du bruit sur les points de périphérie est faible devant la valeur du rayon R du cercle ;
   - la distance entre le centre du cercle à estimer et le centre du cercle connu approximativement est faible devant ladite valeur du rayon R du cercle ;
   cette expression analytique étant développée en fonction des quantités $X_i$, $Y_i$, $XY_{i,j}$ proportionnelles aux moments d'ordre 3 ou moins.

5. Dispositif selon la revendication 4, caractérisé en ce que lesdites fonctions purement analytiques sont deux fonctions du second degré dont les variables représentent les coordonnées du centre translaté à estimer, fonctions dont les coefficients sont des fonctions rationnelles des quantités $X_i, Y_i$, $XY_{i,j}$ proportionnelles aux moments d'ordre 3 ou moins, en ce que ces fonctions du second degré admettent chacune deux solutions qui sont des fonctions irrationnelles desdites quantités $X_i$, $Y_i$, $XY_{i,j}$, et en ce que les coordonnées $(\hat{a}',\hat{b}')$ du centre O' du cercle translaté à estimer sont choisies, entre les deux solutions, comme le doublet de module minimum.

FIG.1

FIG.2

FIG. 3

E.S

C.T

D.T.

T.R.

LU

FIG. 4

P

(pixels⁻¹)

14.

12.

10.

8.

6.

4.

2.

$C_o$

$C_r$

90   120   150   180   210   240   270   300   330   360

CT (°)

FIG.6

18

a

CT

FIG.5

b

CT

LU

FIG.7

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| D,X | COMPUTER VISION, GRAPHICS, AND IMAGE PROCESSING, ACADEMIC PRESS INC. vol. 45, no. 3 , March 1989 , DULUTH, MN, US pages 362 - 370 XP000054688 S.M.THOMAS ET AL 'A SIMPLE APPROACH FOR THE ESTIMATION OF CIRCULAR ARC CENTER AND ITS RADIUS' * the whole document * | 1-5 | G06F15/70 G01S3/786 B64G1/36 G06F15/353 |
| A | COMPUTER VISION, GRAPHICS, AND IMAGE PROCESSING; ACADEMIC PRESS INC. vol. 38, no. 3 , June 1987 , DULUTH, MN, US pages 317 - 326 U.M.LANDAU 'ESTIMATION OF A CIRCULAR ARC CENTER AND ITS RADIUS' * page 318, line 1 - page 321, line 6 * | 1-5 | |
| D,A | EP-A-0 405 678 (SOCIETE ANONYME D'ETUDES ET REALISATIONS NUCLEAIRES - SODERN, FR) 2 January 1991 * the whole document * | 1 | TECHNICAL FIELDS SEARCHED (Int.Cl.5) G06F G01S B64G |

The present search report has been drawn up for all claims

| Place of search | Date of completion of the search | Examiner |
|---|---|---|
| THE HAGUE | 16 December 1993 | Barba, M |

EPO FORM 1503 03.82 (P04C01)